# EUROPEAN PATENT APPLICATION

(11) **EP 2 816 524 A1**
(43) Date of publication of application: **24.12.2014**
(21) Application number: 14171981.5
(22) Date of filing: 11.06.2014
(51) Int. Cl.: G06Q 40/02

(54) **Future credit score projection**

(30) Priority: 11.06.2013 US 201313915527
(71) Applicant: Fair Isaac Corporation, San Jose, CA 95110 (US)
(72) Inventor: Gao, Lu, Roseville, MN 55113 (US); LaCounte, Brendan, Roseville, MN 55113 (US); Dornhelm, Ethan, Roseville, MN 55113 (US)
(74) Representative: Mintz Levin Cohn Ferris Glovsky and Popeo LLP

(57) **Abstract**

The current subject matter provides models that enable a projection of credit scores at a specified future date as well as an estimation of a date when a credit score will reach a certain level. Related apparatus, systems, techniques and articles are also described.

## Description

### TECHNICAL FIELD

The subject matter described herein relates to the projection of future credit scores for individuals.

### BACKGROUND

A credit score is a numerical expression based on a statistical analysis of credit files (e.g., credit bureau data, etc.) of an individual to represent credit risk associated with such individual. Credit scores can be used by banks, credit card companies, insurance companies, and other entities to evaluate and monitor the potential risks for credit-related transactions with individuals. In particular, credit scores are often used as part of an underwriting process to determine what particular products or services to extend to a particular individual. In some cases, an individual may not immediately qualify for a particular product or service based on their current credit scores or their credit related activity is insufficient to generate a credit score. However, such individuals might, at a future point in time, be eligible for such products or services.

### SUMMARY

In a first aspect, data is received that characterizes a request for a credit score at a future date. Thereafter, data is received that comprises values for each of a plurality of variables used by a predictive scoring model to generate a credit score. With such an arrangement, at least a portion of the variables characterize an occurrence or non-occurrence of credit-related events associated with an individual within at least one historical first time window preceding a scoring date. The at least one first historical time window can comprise a fixed number of days prior to and including the scoring date. The predictive model can be trained using historical credit data derived from a population of individuals. Subsequently, the values for at least one of the variables are modified to only characterize the occurrence or non-occurrence of events within at least one second time window prior to and including the future date and comprising the fixed number of days. It is then determined, using the modified values and the predictive model, a projected credit score at the future date. Data can then be provided (e.g., transmitted, loaded, persisted, displayed, etc.) that characterizes the projected future credit score.

In a first interrelated aspect, data is received that characterizes a request for a date at which a consumer will first have a specified credit score. Thereafter, data is received that includes values for each of a plurality of variables used by a predictive scoring model to generate a current credit score for the consumer. At least a portion of the variables characterize an occurrence or non-occurrence of credit-related events associated with an individual within at least one historical first time window preceding a scoring date. The at least one first historical time window includes a fixed number of days prior to and including the scoring date and the predictive model is trained using historical credit data derived from a population of individuals. Subsequently, values for a least one of the variables are recursively modified to only characterize the occurrence or non-occurrence of events within at least one second time window prior to and including a future date and comprising the fixed number of days and the credit score is determined using the predictive model until such time that the current credit score for the consumer will first equal the specified credit score. Data is then provided that characterizes the date at which the current credit score will first equal the specified credit score.

In a further interrelated aspect, data is received that characterizes a request for a date at which a consumer will first have a specified increase in a credit score. Thereafter, data is received that includes values for each of a plurality of variables used by a predictive scoring model to generate a current credit score for the consumer. At least a portion of the variables characterize an occurrence or non-occurrence of credit-related events associated with an individual within at least one historical first time window preceding a scoring date. The at least one first historical time window includes a fixed number of days prior to and including the scoring date and the predictive model is trained using historical credit data derived from a population of individuals. Subsequently, values for a least one of the variables are recursively modified to only characterize the occurrence or non-occurrence of events within at least one second time window prior to and including a future date and comprising the fixed number of days and the credit score is determined using the predictive model until such time that the current credit score will increase to the specified amount. Data is then provided that characterizes the date at which the current credit score will first increase by the specified amount.

Computer program products are also described that comprise non-transitory computer readable media storing instructions, which when executed by one or more data processors of one or more computing systems, causes at least one data processor to perform operations herein. Similarly, computer systems are also described that may include one or more data processors and a memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including but not limited to a connection over a network (e.g. the Internet, a wireless wide area network, a local area network, a wide area network, a wired network, or the like), via a direct connection between one or more of the multiple computing systems, etc.

The subject matter described herein provides many advantages. For example, the current subject matter can be used to identify segments of a population whose credit score is likely to change materially in the near future, so that offerings/underwriting strategies can be tailored to that population based not only on their current credit score but also where such score is likely to be headed. Furthermore, the current subject matter can be used to estimate dates at which credit scores can be generated for individuals with incomplete credit histories.

The details of one or more variations of the subject matter described herein are set forth in the accompanying drawings and the description below. Other features and advantages of the subject matter described herein will be apparent from the description and drawings, and from the claims.

### DESCRIPTION OF DRAWINGS

FIG. 1 is a chart illustrating how various categories of credit related data are weighted by one type of credit score;
FIG. 2 is a table illustrating the score algorithm for one type of credit score, including various time-based attributes;
FIG. 3 is a table illustrating credit related data for a first consumer;
FIG. 4 is a diagram illustrating a sequence of events for the first consumer;
FIG. 5 is a table illustrating credit related data for a second consumer;
FIG. 6 is a process flow diagram illustrating a method for projecting future credit scores;
FIG. 7 is a process flow diagram illustrating a method for projecting a date at which a consumer will have a specified credit score; and
FIG. 8 is a process flow diagram illustrating a method for projecting a date at which a consumer will have a specified increase in credit score.

### DETAILED DESCRIPTION

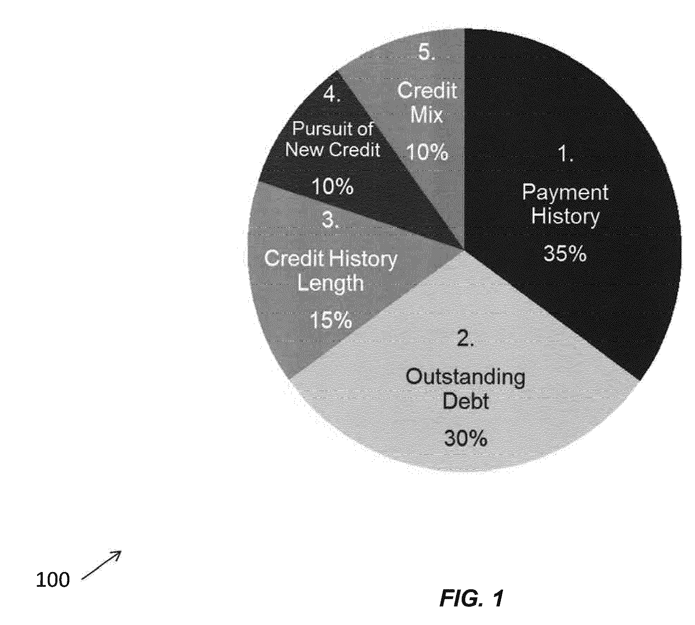

Credit scores are typically calculated from several different pieces of credit data from an individual's credit report. With some credit scores, such data can be grouped into five categories: payment history, outstanding debt, credit history length, pursuit of new credit, and credit mix. FIG. 1 is a chart 100 that illustrates percentages that reflect the relative contribution of each category in calculating one type of credit score. With some credit scoring models, points from each such category can be aggregated to result in an overall credit score.

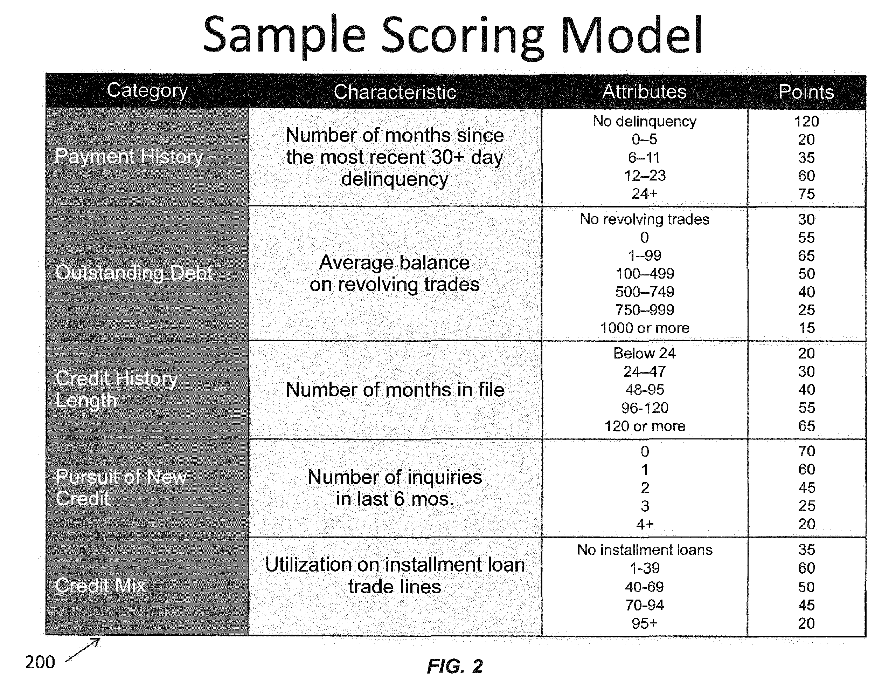

With reference to the table 200 of FIG. 2, each category can have one or more time-based attributes which are used to generate points which can, for example, be aggregated (and weighted) across all categories to result in the credit score. For example, for the payment history, the number of points can be based on a number of months since the most recent delinquency exceeding thirty days. The outstanding debt category can be based on an average balance of an individual. The credit history length category can be based on a number of months an individual has a credit bureau file. The pursuit of new credit category can be based on a number of credit inquiries occurring within a pre-defined time period (e.g., 6 months, etc.). The credit mix category can be based on the mix of credit cards, retail accounts, installment loans, finance company accounts and mortgage loans for an individual.

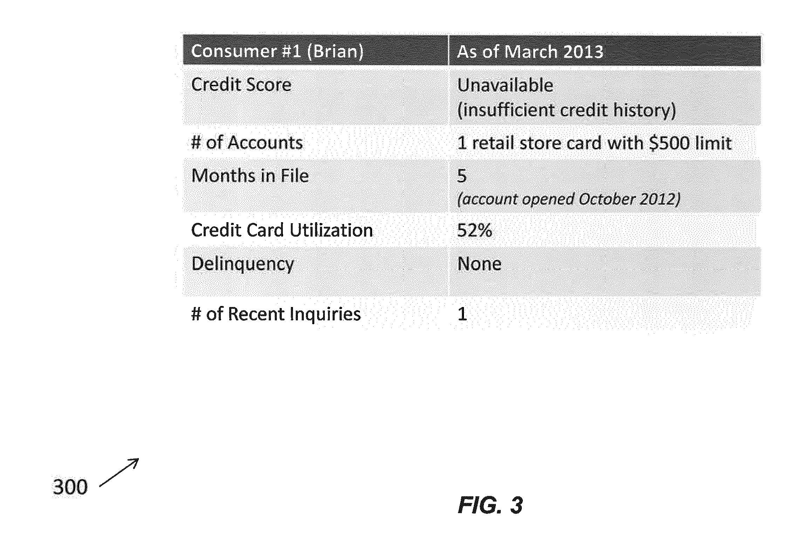

FIG. 3 is a table 300 that shows details with regard to a particular consumer named Brian. The credit score for Brian is indicated as being incomplete due to insufficient credit history because Brian has only five months of credit history (and six months of credit history are required for the corresponding credit scoring model). As will be described in further detail below, using the future credit score projection models, it can be predicted that Brian's credit score will be 655 as of April 2013. Based on this projection, future actions can be taken prior to the time at which Brian becomes scoreable (i.e., the data at which a credit score can first be generated for Brian).

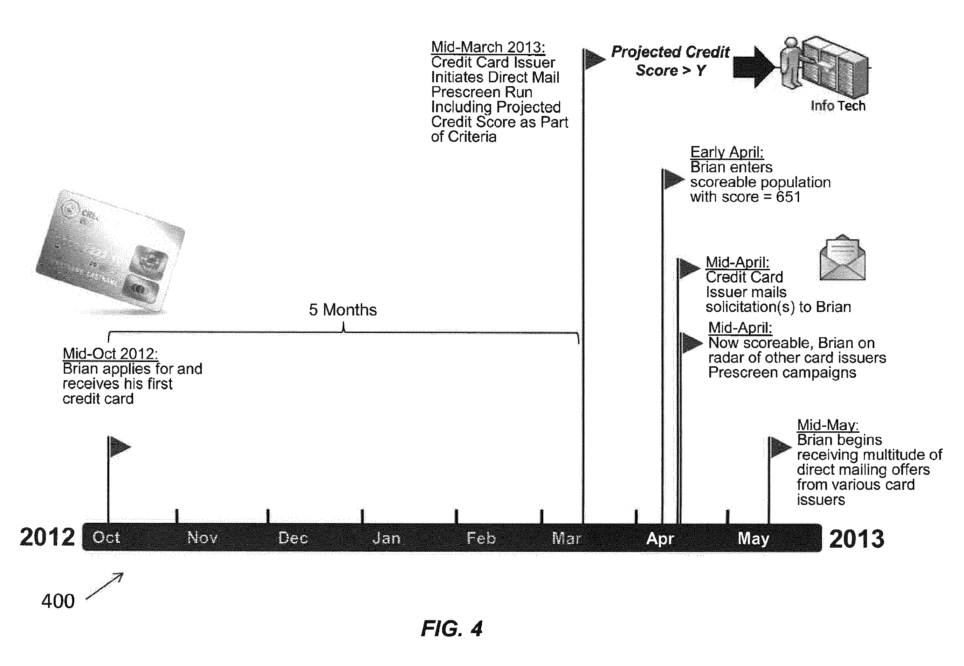

FIG. 4 is a diagram 400 illustrating some of the advantages provided by the current subject matter. Brian first applies for and receives a credit card in October 2012. In early March 2013, a first credit card issuer initiates a pre-screen process in which it identifies (by utilizing the current subject matter) potential customers who are not yet scoreable but whom have a future credit score projection above a pre-defned threshold. Thereafter, in early April 2013, Brian first becomes scoreable with a credit score of 651 (very close to the originally projected score of 655). Soon afterwards in April 2013, the first credit card issuer mails Brian a credit card solicitation. At the same time, other credit card issuers also become aware of Brian and begin to mail solicitations to him. Given typical delays in direct mailing campaigns, Brian begins receiving solicitations from other credit card issuers starting in May 2013. In this scenario, the first credit card issuer is in a much better position to convert Brian into a customer given their early direct mailing (which was enabled by the future credit score projection).

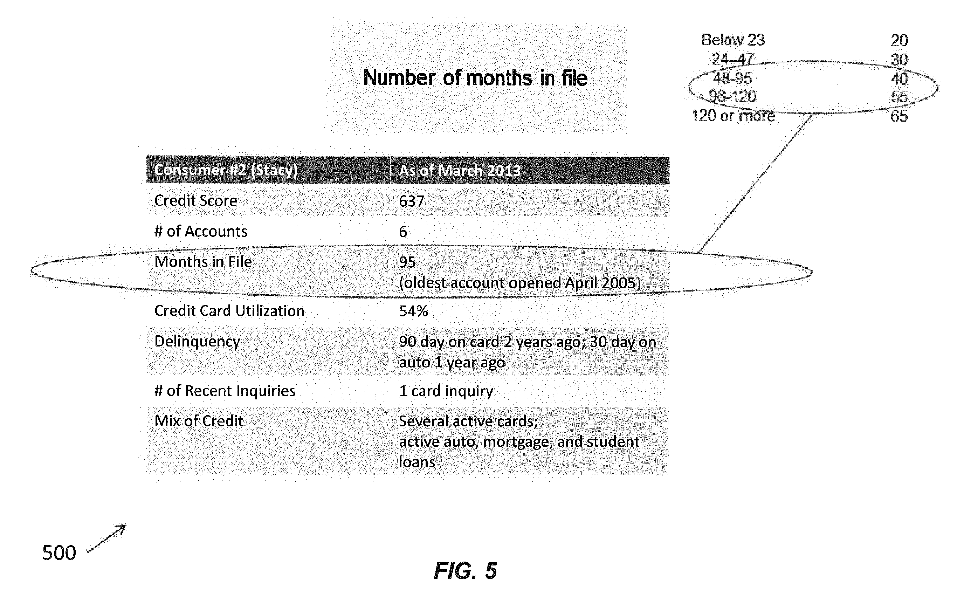

The current subject matter can also be used to project future credit scores for individuals that have sufficient credit history. For example, referencing diagram 500 of FIG. 5, a customer Stacy currently has a credit score of 637. She has 6 accounts, she has a credit history (i.e., she has had a credit file) for 95 months, her credit card utilization is 54%, there are two delinquency events, one recent card inquiry, and she has a mix of credit sources. A one month projection of Stacy's credit score results in an increase by 15 points to 652. This 15 point increase is due to Stacy's number of months in file value shifting from 95 to 96 in the projection, and the resulting point differential associated with having number of months in file between 48-95 months (40 points) and that of 96-120 months (55 points).

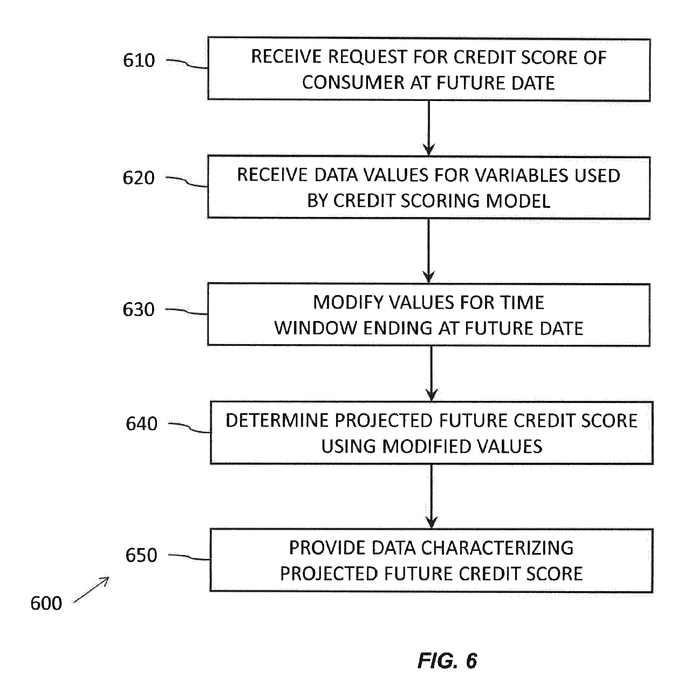

FIG. 6 is a process flow diagram illustrating a method 600 in which, at 610, data is received that characterizes a request for a credit score at a future date. Thereafter, at 620, data is received that comprises values for each of a plurality of variables used by a predictive scoring model to generate a credit score. With such an arrangement, at least a portion of the variables characterize an occurrence or non-occurrence of credit-related events associated with an individual within at least one historical first time window preceding a scoring date. The at least one first historical time window can comprise a fixed number of days prior to and including the scoring date. The predictive model can be trained using historical credit data derived from a population of individuals. Subsequently, at 630, the values for at least one of the variables are modified to only characterize the occurrence or non-occurrence of events within at least one second time window prior to and including the future date and comprising the fixed number of days. It is then determined, at 640, using the modified values and the predictive model, a projected credit score at the future date. Data can then be provided, at 650, that characterizes the projected future credit score.

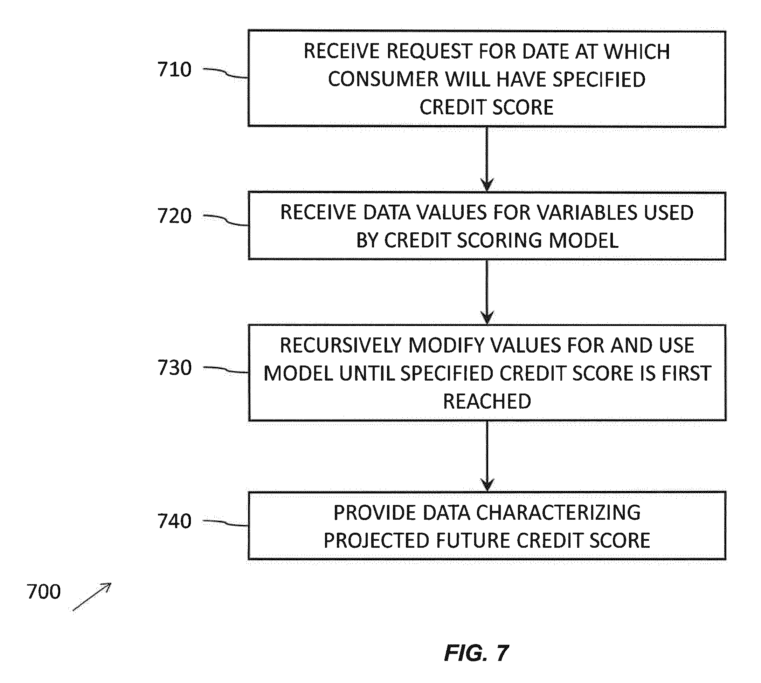

FIG. 7 is a process flow diagram illustrating a method 700 in which, at 710, data is received that characterizes a request for a date at which a consumer will first have a specified credit score. Thereafter, at 720, data is received that includes values for each of a plurality of variables used by a predictive scoring model to generate a current credit score for the consumer. At least a portion of the variables characterize an occurrence or non-occurrence of credit-related events associated with an individual within at least one historical first time window preceding a scoring date. The at least one first historical time window includes a fixed number of days prior to and including the scoring date and the predictive model is trained using historical credit data derived from a population of individuals. Subsequently, at 730, values for a least one of the variables are recursively modified to only characterize the occurrence or non-occurrence of events within at least one second time window prior to and including a future date and comprising the fixed number of days and the credit score is determined using the predictive model until such time that the current credit score for the consumer will first equal the specified credit score. Data is then provided, at 740, that characterizes the date at which the current credit score will first equal the specified credit score.

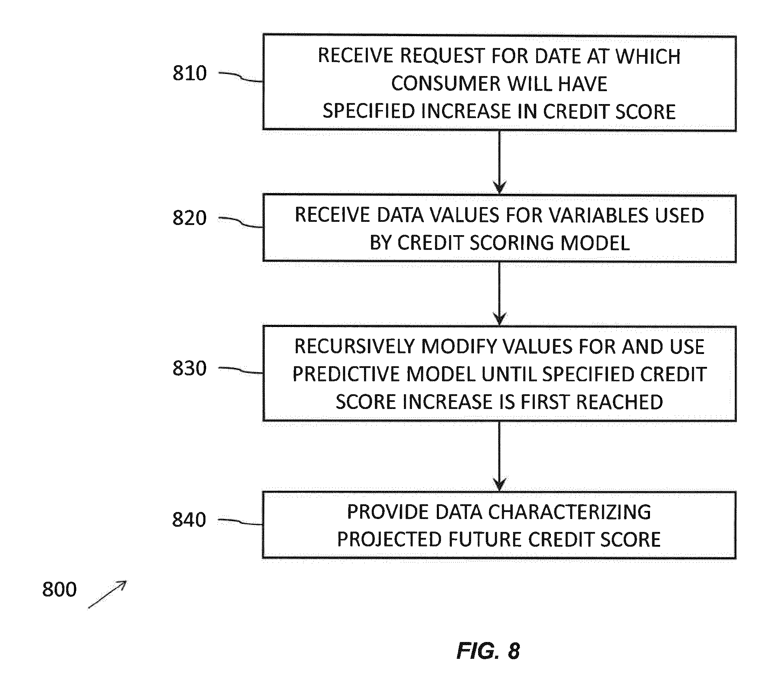

FIG. 8 is a process flow diagram illustrating a method 800 in which, at 810, data is received that characterizes a request for a date at which a consumer will first have a specified increase in a credit score. Thereafter, at 820, data is received that includes values for each of a plurality of variables used by a predictive scoring model to generate a current credit score for the consumer. At least a portion of the variables characterize an occurrence or non-occurrence of credit-related events associated with an individual within at least one historical first time window preceding a scoring date. The at least one first historical time window includes a fixed number of days prior to and including the scoring date and the predictive model is trained using historical credit data derived from a population of individuals. Subsequently, at 830, values for a least one of the variables are recursively modified to only characterize the occurrence or non-occurrence of events within at least one second time window prior to and including a future date and comprising the fixed number of days and the credit score is determined using the predictive model until such time that the current credit score will increase to the specified amount. Data is then provided, at 840, that characterizes the date at which the current credit score will first increase by the specified amount.

Various types of predictive models can be utilized including, without limitation, scorecard models, logistic regression models, neural network-based models, and the like. Regardless of the type of model, the values that are based on events occurring or not occurring within a time window can be modified based on a shifting of the applicable window to some point in the future. During the shifted time window, in some variations, it is assumed that no material changes to the credit file and/or no adverse events (i.e., events negatively affecting creditworthiness) occur during such time period. In other variations, an average of historical events for the particular category can be utilized / projected going forward rather than assuming that no adverse events occur within the shifted time window.

One or more aspects or features of the subject matter described herein may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device (e.g., mouse, touch screen, etc.), and at least one output device.

These computer programs, which can also be referred to as programs, software, software applications, applications, components, or code, include machine instructions for a programmable processor, and can be implemented in a high-level procedural language, an object-oriented programming language, a functional programming language, a logical programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, the subject matter described herein can be implemented on a computer having a display device, such as for example a cathode ray tube (CRT) or a liquid crystal display (LCD) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive trackpads, voice recognition hardware and software, optical scanners, optical pointers, digital image capture devices and associated interpretation software, and the like.

The subject matter described herein may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flow(s) depicted in the accompanying figures and/or described herein do not necessarily require the particular order shown, or sequential order, to achieve desirable results. Other implementations may be within the scope of the following claims.

## Claims

1. A computer implemented method comprising:
receiving data characterizing a request for a credit score for a consumer at a future date;
receiving data comprising values for each of a plurality of variables used by a predictive scoring model to generate a credit score for the consumer, at least a portion of the variables characterizing an occurrence or non-occurrence of credit-related events associated with an individual within at least one historical first time window preceding a scoring date, the at least one first historical time window comprising a fixed number of days prior to and including the scoring date, the predictive model being trained using historical credit data derived from a population of individuals;
modifying the values for at least one of the variables to only characterize the occurrence or non-occurrence of events within at least one second time window prior to and including the future date and comprising the fixed number of days;
determining, using the odified values and the predictive model, a projected credit score at the future date; and
providing data characterizing the projected future credit score.

2. A method as in claim 1, wherein providing data comprises at least one of:
displaying the data characterizing the projected future credit score, transmitting the data characterizing the projected future credit score, loading the data characterizing the projected future credit score into memory, and persisting the data characterizing the projected future credit score.

3. A method as in claim 1 or claim 2, wherein the predictive model comprises at least one of:
a scorecard model, a logistic regression model, and a neural network model.

4. A method as in any preceding claim, wherein the future date is a date having a pre-specified interval from a date for the request.

5. A method as in any preceding claim, further comprising:
receiving, via a graphical user interface, user-generated input specifying the future date.

6. A computer implemented method comprising:
receiving data characterizing a request for a specified credit score for a consumer;
receiving data comprising values for each of a plurality of variables used by a predictive scoring model to generate a current credit score for the consumer, at least a portion of the variables characterizing an occurrence or non-occurrence of credit-related events associated with an individual within at least one historical first time window preceding a scoring date, the at least one first historical time window comprising a fixed number of days prior to and including the scoring date, the predictive model being trained using historical credit data derived from a population of individuals;
recursively modifying the values for at least one of the variables to only characterize the occurrence or non-occurrence of events within at least one second time window prior to and including a future date and comprising the fixed number of days and determine a credit score using the predictive model until such time that the current credit score for the consumer will first equal the specified credit score; and
providing data characterizing the date at which the current credit score will first equal the specified credit score.

7. A method as in claim 6, wherein providing data comprises at least one of:
displaying the data characterizing the date at which the current credit score will first equal the specified credit score, transmitting the data characterizing the date at which the current credit score will first equal the specified credit score, loading the data characterizing the date at which the current credit score will first equal the specified credit score, and persisting the data characterizing the date at which the current credit score will first equal the specified credit score.

8. A method as in claim 6 or claim 7, wherein the predictive model comprises at least one of: a scorecard model, a logistic regression model, and a neural network model.

9. A computer implemented method comprising:
receiving data characterizing a request for a date at which a credit score for a consumer increases by a specified amount;
receiving data comprising values for each of a plurality of variables used by a predictive scoring model to generate a current credit score for the consumer, at least a portion of the variables characterizing an occurrence or non-occurrence of credit-related events associated with an individual within at least one historical first time window preceding a scoring date, the at least one first historical time window comprising a fixed number of days prior to and including the scoring date, the predictive model being trained using historical credit data derived from a population of individuals;
recursively modifying the values for at least one of the variables to only characterize the occurrence or non-occurrence of events within at least one second time window prior to and including the future date and comprising the fixed number of days and determine a credit score using the predictive model until such time that the current credit score for the consumer will first increase by the specified amount; and
providing data characterizing the date at which the current credit score will first increase by the specified amount.

10. A method as in claim 9, wherein providing data comprises at least one of:
displaying the data characterizing the date at which the current credit score will first increase by the specified amount, transmitting the data characterizing the date at which the current credit score will first increase by the specified amount, loading the data characterizing the date at which the current credit score will first increase by the specified amount, and persisting the data characterizing the date at which the current credit score will first increase by the specified amount.

11. A method as in claim 9 or claim 10, wherein the predictive model comprises at least one of: a scorecard model, a logistic regression model, and a neural network model.
